# EUROPEAN PATENT APPLICATION

(11) **EP 4 206 889 A1**
(43) Date of publication of application: **05.07.2023**
(21) Application number: 21865830.0
(22) Date of filing: 19.08.2021
(51) Int. Cl.: G06F 3/0488

(54) **ELECTRONIC DEVICE CONTROL METHOD AND APPARATUS, AND TERMINAL AND STORAGE MEDIUM**

(30) Priority: 11.09.2020 CN 202010951871
(71) Applicant: BEIJING BYTEDANCE NETWORK TECHNOLOGY CO., LTD., Beijing 100041 (CN)
(72) Inventor: ZHU, Haizhou, Beijing 100190 (CN)
(74) Representative: Dentons UK and Middle East LLP
(86) International application number: PCT/CN2021/113529
(87) International publication number: WO 2022/052774

(57) **Abstract**

Provided in the embodiments of the present disclosure are an electronic device control method and apparatus, and a terminal and a storage medium. The method comprises: in response to a first preset operation, displaying a first window in a first display region; and in response to a second preset operation, displaying a plurality of second windows in the first display region in a preset manner, wherein the plurality of second windows are all in an activated state, and the plurality of second windows do not overlap with each other. By means of the electronic device control method provided in the present disclosure, the state of displaying a single window in a certain display region can be quickly switched to a multi-window display state which is suitable for multi-window interaction, such that the convenience and efficiency of interaction between multiple windows can be improved, thereby improving the user experience.

## Description

### Cross Reference to Related Applications

The present application is proposed based on and claims the priority of the Chinese patent application No. 202010951871.7, filed on September 11, 2020 and entitled "ELECTRONIC DEVICE CONTROL METHOD AND APPARATUS, AND TERMINAL AND STORAGE MEDIUM", the entire contents of which are incorporated herein by reference.

### Field

Embodiments of the present disclosure relate to the technical field of computers, in particular to an electronic device control method and apparatus, a terminal and a storage medium.

### Background

With the development of flexible screens and spliced dual or multiple screens, higher requirements are put forward to the demand for interaction of applications, and the current application interaction still needs further improvement.

### Summary

The content part of the disclosure is provided so as to introduce the ideas in a brief form, which will be described in detail in the specific embodiments below. The content of the disclosure is not intended to identify the key features or necessary features of the technical solution required to be protected, nor is it intended to limit the scope of the technical solution required to be protected.

In order to solve the above problems, the present disclosure provides an electronic device control method and apparatus, a terminal and a storage medium. The electronic device control method of the present disclosure can adapt to the needs of flexible screens or spliced screens and improve operation efficiency and interaction convenience of application windows, thereby enhancing user experience.

According to an embodiment of the present disclosure, an electronic device control method is provided, a display screen of an electronic device comprising a first display region, and an area of the first display region being smaller than a display area of the display screen, wherein the electronic device control method comprises: displaying a first window in the first display region in response to a first preset operation; and displaying a plurality of second windows in the first display region in a preset manner in response to a second preset operation, the plurality of second windows being all in an active state, wherein the plurality of second windows do not overlap one another.

According to another embodiment of the present disclosure, an electronic device control apparatus is provided, a display screen of an electronic device comprising a first display region, and an area of the first display region being smaller than a display area of the display screen, wherein the electronic device control apparatus comprises: a display module configured to display a first window in the first display region in response to a first preset operation; and a control module configured to display a plurality of second windows in the first display region in a preset manner in response to a second preset operation, the plurality of second windows being all in an active state, wherein the plurality of second windows do not overlap one another.

According to another embodiment of the present disclosure, a terminal is provided, and includes: at least one memory and at least one processor, wherein the memory is configured to store a program code, and the processor is configured to call the program code stored in the memory to perform the above electronic device control method.

According to another embodiment of the present disclosure, a computer storage medium is provided, the computer storage medium stores a program code, and the program code is used for performing the above electronic device control method.

By using the electronic device control method of the present disclosure, a state of displaying a single window in a certain display region can be quickly switched to a multi-window display state suitable for multi-window interaction, which can improve the convenience and efficiency of interaction among a plurality of windows, thereby enhancing the user experience.

### Brief Description of the Drawings

The foregoing and other features, advantages and aspects of embodiments of the present disclosure will become more apparent in combination with the accompanying drawings and with reference to the following specific implementations. Throughout the accompanying drawings, the same or similar reference numerals indicate the same or similar elements. It should be understood that the accompanying drawings are schematic and that the originals and elements are not necessarily drawn to scale.
Fig. 1 shows a schematic flow diagram of an electronic device control method according to an embodiment of the present disclosure.
Fig. 2 to Fig. 7 show schematic diagrams of window display according to an embodiment of the present disclosure.

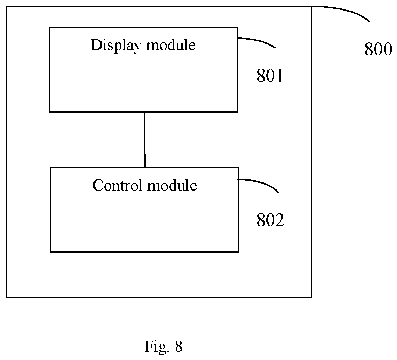

Fig. 8 shows a schematic diagram of an electronic device control apparatus according to an embodiment of the present disclosure.
Fig. 9 shows a schematic structural diagram of an electronic device 900 suitable for implementing an embodiment of the present disclosure.

### Detailed Description of the Embodiments

Embodiments of the present disclosure will be described in more detail below with reference to the accompanying drawings. Although some embodiments of the present disclosure are shown in the accompanying drawings, it should be understood that the present disclosure can be implemented in various forms, and should not be interpreted as limited to the embodiments described herein. Instead, these embodiments are provided for a more thorough and complete understanding of the present disclosure. It should be understood that the drawings and embodiments of the present disclosure are only for illustrative purposes and are not intended to limit the scope of protection of the present disclosure.

It should be understood that the steps recorded in the method embodiments of the present disclosure can be performed in different order and/or in parallel. Further, the method embodiments may include additional steps and/or omit to perform the steps shown. The scope of this disclosure is not limited in this respect.

The term "comprise" and its variants used herein are open including, that is, "including but not limited to". The term "based on" is "at least partially based on". The term "one embodiment" means "at least one embodiment"; The term "another embodiment" means "at least one other embodiment"; The term "some embodiments" means "at least some embodiments". Other terms are defined in the following description.

It should be noted that the "first", "second" and other concepts mentioned in this disclosure are only used to distinguish different devices, modules or units, and are not used to define the order or interdependence of functions performed by these devices, modules or units.

It should be noted that the modification of "one" and "ore" mentioned in this disclosure is schematic rather than restrictive, and those skilled in the art should understand that, unless otherwise explicitly pointed out in the context, it should be understood as "one or more".

Currently, with the development of technologies of flexible screens and spliced screens, conditions are created for displaying a plurality of windows in a screen. However, there is still a space for improvement in the interaction among the plurality of windows. In some embodiments of the present disclosure, "window" in an electronic device control method refers to windows of various App applications of a terminal. The terminal in the present disclosure may include, but not limited to, mobile terminal devices such as a cell phone, a smartphone, a laptop, a personal digital assistant (PDA), a tablet computer (PAD), a portable multimedia player (PMP), a navigation apparatus, a vehicle-mounted terminal device, a vehicle-mounted display terminal and a vehicle-mounted electronic rearview mirror, and fixed terminal devices such as a digital TV and a desktop computer. In some embodiments of the present disclosure, illustrated with a cell phone as an example, as exemplary, foldable cell phones include at least two types: a whole flexible screen can be folded, or two or more screens are spliced and folded by means of hinges, etc., and the usual folding methods include inward folding (folded in half), outward folding (folded over), etc.

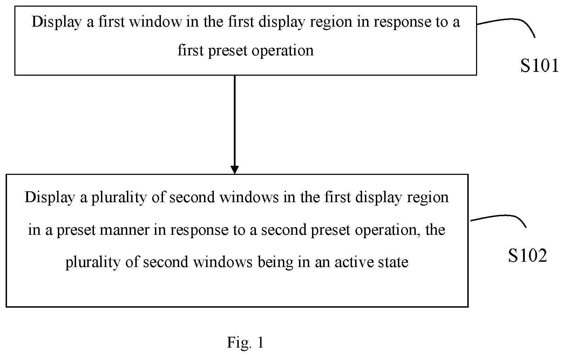

As shown in Fig. 1, the present disclosure provides an electronic device control method, including step 5101, in response to a first preset operation, a first window is displayed in a first display region of a display screen of an electronic device. In some embodiments, the electronic device may include any one terminal such as a smartphone as described above. In some embodiments, an area of the first display region is smaller than a display area of the display screen. In some embodiments, the first preset operation may be an operation instruction of a user.

In some embodiments, the electronic device control method of the present disclosure further includes step S102, in response to a second preset operation, a plurality of second windows are displayed in the first display region in a preset manner, and the plurality of second windows are all in an active state, wherein the plurality of second windows do not overlap one another. In some embodiments, when the first window is displayed in the first display region, a display region of the first window is larger, so that a user can conveniently perform various operations on the first window in a detailed manner, for example, to facilitate the selection of positions for copying, pasting, etc. In some embodiments, when the plurality of second windows are displayed in the first display region in the preset manner, multi-window interaction among the plurality of second windows or among the second windows and other windows is facilitated. At this moment, since the second windows are all in the active state, it is possible to interact among a plurality of windows in a single first display region. By using the electronic device control method of the present disclosure, a state of displaying a single window in a certain display region can be quickly switched to a multi-window display state suitable for multi-window interaction, which can improve the convenience and efficiency of interaction among a plurality of windows, thereby enhancing the user experience.

In some embodiments, the display screen further includes a second display region, the first display region and the second display region at least partially overlap when the display screen is in a folded state, or the first display region and the second display region correspond to different display screens of spliced display screens. In a particular embodiment, the first display region and the second display region are separated along a folding line of a flexible screen, for example, each occupies half of the flexible screen. In another particular embodiment, the first display region is one of two spliced screens, and the second display region is the other of the two spliced screens. In some embodiments, the first preset operation may be any suitable operation that includes clicking to reduce the displayed window.

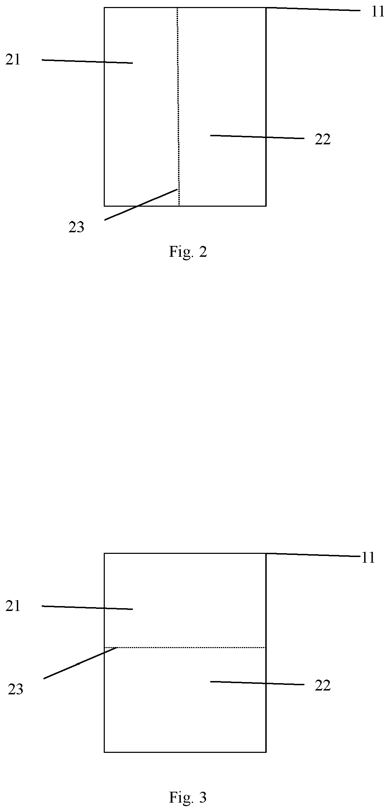

As shown in Fig. 2, taking a foldable screen that folds left and right as an example, a display region 11 of the foldable screen includes a first display region 21 and a second display region 22, the foldable screen may be folded with a line shown by a dashed line 23, and the first display region 21 and the second display region 22 are located on opposite sides of the dashed line 23 respectively. It should be understood that the dashed line 23 is needed for illustration purposes and may not actually exist. In addition, as shown in Fig. 3, the same settings may be made for a foldable screen that folds up and down. It should be understood that the first display region 21 or the second display region 22 may span the dashed line 23 such that the first display region 21 or the second display region 22 may be present at both sides of the dashed line 23 at the same time. In some embodiments, the first display region is located on one of the two spliced screens, the second display region is located on the other of the two spliced screens, and at this moment, the dashed line 23 may indicate the connection of the spliced screens.

In some embodiments, the second preset operation includes a gesture pinch operation, a click on a physical button or a virtual button or an expansion of the display screen when the display screen is in a folded state. In some embodiments, the gestural pinch operation includes a two-finger pinch, a three-finger pinch, a four-finger pinch, or even a five-finger pinch, etc. In the present disclosure, the two-finger pinch means that two fingers approach each other from an open state, and the three-finger pinch means that three fingers approach or come closer to one another from an open state. Similarly, the four-finger pinch and the five-finger pinch also mean that the fingers approach or come closer to one another. An amplitude of each finger approaching or coming to one another may be preset by a system or adjusted by the user. In some embodiments, the physical button or the virtual button may be set to achieve the above functions, that is, the plurality of second windows are displayed in the first display region in the preset manner. In some embodiments, the same function as described above can be achieved by unfolding the display screen when the display screen is in the folded state, for example, when only the first display region is lit. In some embodiments, the system may preset or the user can autonomously choose which method to use to achieve this. In this way, selection can be made according to the needs of the user, which is also conducive to improving the user experience.

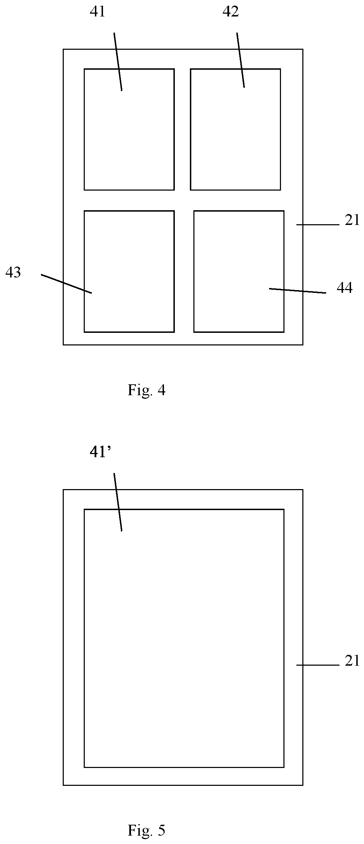

In some embodiments, after the plurality of second windows are displayed in the first display region in the preset manner, one of the plurality of second windows is displayed in a full screen manner in the first display region in response to a third preset operation on one of the plurality of second windows. In some embodiments, the third preset operation may include a click operation, a voice instruction, etc. For example, in some embodiments, the plurality of second windows include a reduced first window, wherein the plurality of second windows are displayed in the first display region before the first window is displayed in the first display region of the display screen of the electronic device. As shown in Fig. 4, a first display region 21 and a plurality of second windows 41, 42, 43 and 44 displayed therein are illustrated. In some embodiments, the window 41 may be a reduced first window, and Fig. 4 shows a state before the first window is displayed in the first display region of the display screen of the electronic device. Fig. 5 shows a state when a first window 41' is displayed in the first display region 21 of the display screen of the electronic device. For example, the first preset operation may be to click on the reduced first window 41, and at this moment, the first window 41' is displayed in the first display region 21, that is, the reduced first window 41 is enlarged for display. In some embodiments, after changing the first display region to display the plurality of second windows, it is possible to return again to the state before the reduced first window 41 is enlarged for display, such as the display state shown in Fig. 4. In this way, the user can conveniently operate the first window 41' when the reduced first window 41 is enlarged for display as the first window 41'. When changing to display the plurality of second windows, a state of displaying a single window in the first display region can be quickly switched to a multi-window display state suitable for multi-window interaction, which can improve the convenience and efficiency of interaction among the plurality of windows.

In some embodiments, displaying the first window in the first display region includes the first window is displayed in the first display region in a full screen manner. For example, as shown in Fig. 5, displaying the first window in the first display region includes the first window 41' is displayed in the first display region 21 of the display screen of the electronic device in a full screen manner. In some embodiments, before the first display region 21 of the display screen of the electronic device displays the first window 41', the reduced first window 41 is displayed in a sub-region of the first display region 21, and after the first display region 21 displays the plurality of second windows in a preset manner (e.g., in a tiled expanded manner), the reduced first window 41 is displayed in the sub-region of the first display region 21. Thus, after the reduced first window 41 is enlarged for display as the first window 41' to more conveniently operate the first window 41', the reduced first window 41 may be returned to an original display state, and at this moment, interaction among the plurality of second windows 41, 42, 43 and 44 or interaction among the plurality of second windows 41, 42, 43 and 44 and other windows (e.g., windows displayed in the second display region) is facilitated.

In some embodiments, the plurality of second windows include a plurality of preset windows or a plurality of recently operated windows. In the above embodiments, it is described that the plurality of second windows 41, 42, 43 and 44 are displayed both before and after the first display region 21 displays the first window 41'. However, in some embodiments, after the plurality of second windows are display in the first display region 21 in the preset manner, the plurality of second windows may be windows completely different from those displayed before the reduced first window 41 is enlarged for display, for example, may be a plurality of windows preset by the system or the user or a plurality of recently operated windows, such as a plurality of windows frequently used by the user, and the plurality of windows may not include the reduced first window 41. This selection is given to the user, which can simplify the user's operation, and it can be quickly switched to a window display page where the user expects multi-window interaction to occur.

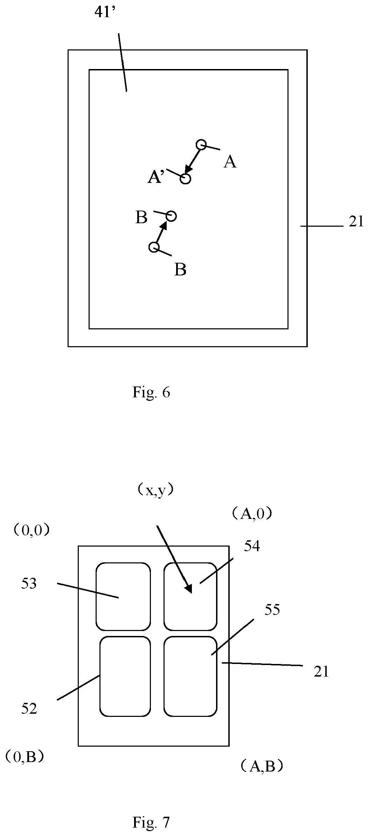

In some embodiments, the gesture pinch operation includes a touch operation and/or a non-touch operation. That is, the fingers may or may not be in contact with the display screen during the gesture pinch operation. In some embodiments, when the gesture pinch operation is the touch operation, the gesture pinch operation is recognized by movement of coordinates of the fingers in display screen. The positions of the fingers in contact with the display screen may correspond to coordinate positions of the fingers in the display screen, and by the change of the coordinate positions of the fingers, a movement trajectory of the fingers may be determined, and then whether the gesture pinch operation occurs is determined. As shown in Fig. 6, an embodiment of the two-finger pinch operation is illustrated. Initial positions of two fingers are A and B respectively. Positions of two fingers are A' and B' respectively after the pinch operation. It can be known from the coordinate positions that the two fingers produce the operation of approaching each other, i.e., the two-finger pinch operation. It should be understood that a distance at which the two fingers approach each other (e.g., 2 cm, 3 cm, 4 cm, etc.) may be used for further defining whether the pinch operation occurs, so as to avoid that misoperation when the approaching distance is too short is recognized as the pinch operation. It should be understood that although only the embodiment of the two-finger pinch is shown above, based on the same principle, whether a three-finger, four-finger, or five-finger pinch operation, etc. occurs may be determined by the change in the coordinate positions of the fingers, which will not be repeated here. In addition, in some embodiments, the two-finger pinch operation may be used within some applications, and at this moment, in order to avoid conflicts and misidentification of operations, the finger pinch operation of the present disclosure may be set to the three-finger pinch operation, the four-finger pinch operation, etc.

In some embodiments, when the gesture pinch operation is the non-touch operation, the gesture pinch operation is recognized by following steps: a plurality of images of fingers within a preset time interval are obtained; and whether the movement trajectory of the fingers is the gesture pinch operation is determined by analyzing the plurality of images. In some embodiments, remote interaction, i.e., non-contact interaction, may be used. For example, the plurality of images of the fingers within the preset time interval may be obtained by a camera (e.g. a front camera) of the electronic device, for example, one frame of image is obtained every 100 ms. By comparing the images before and after the operation, the relative movement changes of the fingers may be recognized. Similarly, the accuracy of recognition can be improved by presetting the mutually approaching distance of the fingers to avoid being recognized as the pinch operation when the fingers approach closer to one another. By using the non-contact interaction, the user can operate from a long distance, and the operation experience of the user is improved.

In some embodiments, since the plurality of second windows are set to be all in the active state, in response to an operation on one of the second windows, a coordinate value of an operation site of one of the second windows is converted to a mapped coordinate value corresponding to a preset coordinate system, and then the mapped coordinate value is fed back to that one of the second windows. In some embodiments, a default way of a terminal system is to pass parameters of the full screen display into a created Activity component, so that the control over the coordinates of the windows corresponds to the case of the full screen display. At this moment, the preset coordinate system corresponds to the coordinates of the full screen display. If another preset coordinate system is used, the control over the coordinates of the windows corresponds to another preset coordinate system. In order to achieve precise control over windows that may be displayed on only part of the display region, control may be achieved by performing coordinate conversion, and then window control is performed based on the converted coordinate values. In some embodiments, coordinate conversion of the coordinate values of the operating sites of the application windows in the active state may be performed by the terminal system. In some embodiments, coordinate conversion of the coordinate values of the operating sites of the application windows in the active state may also be performed by the application. For example, as shown in Fig. 7, four application windows 52, 53, 54 and 55 are displayed in the first display region 21. It is assumed that the four windows are of equal size and are evenly distributed in 1/4 of the display region. At this moment, when the touch operation (e.g., clicking, swiping, zooming, etc.) is performed on the window 54 in the upper right corner, since the application of the window 54 is not aware that the display region of the application has been reduced to 1/4 or a side length of the application has been reduced to 1/2, when the user interacts with touch in the small upper right corner region, the system will map the touch coordinate values to converted values after the preset coordinate system (e.g., full screen display) to inform the application for interaction. For example, when the user clicks on a center point of the window 54, the actual click position is the center of the upper right 1/4 region, at this moment, a coordinate (x, y) of the point is converted into a coordinate (n, m) corresponding to the preset coordinate system and mapped to the center point of the screen, and the mapped coordinate is informed to the application itself, and at this moment, the application will assume that the user clicks on the center of the screen, and makes the correct response.

As shown in Fig. 7, the coordinate of the operation site is (x, y), and coordinates of four corners of an original screen in the preset coordinate system are (0, 0), (A, 0), (0, B) and (A, B). When the side length of the application window is 1/z relative to the corresponding side length of the original screen, the converted coordinate (n, m) may be calculated as follows: n=x^{∗}z when the application window is displayed in a first column counting from the left; n=(x-((h-1)/z^{∗}A)^{∗}z when the application window is displayed in an h^{th} column counting from the left (h is less than or equal to z); m=y^{∗}z when the application window is displayed in a first column counting from the top; and m=(y-((i-1)/z)^{∗}B)^{∗}z when the application window is displayed in an i^{th} column counting from the top (i is less than or equal to z). As shown in Fig. 7, when four windows are displayed in the display region, the side length of the application window is 1/2 the side length of the original screen, at which moment, z=2. Similarly, when nine windows are displayed in the display region, the side length of the application window is 1/3 the side length of the original screen, at which moment, z=3. It should be understood that when different quantities of windows are displayed in horizontal and vertical directions, the z value may be set separately in the horizontal and vertical directions. For example, when six windows (2 rows ^{∗} 3 columns) are displayed in the display region, the side length of the application window in the horizontal direction is 1/3 of the corresponding side length of the original screen at this time, i.e., z=3 when calculating n, and the side length of the application window in the vertical direction is 1/2 of the corresponding side length of the original screen, i.e., z=2 when calculating m.

An embodiment of the present disclosure further provides an electronic device control apparatus 800 corresponding to the method described above, including a display module 801 and a control module 802. A display screen of the electronic device includes a first display region, and an area of the first display region is smaller than a display area of the display screen. The display module 801 is configured to display, in response to a first preset operation, a first window in the first display region. The control module 802 is configured to display, in response to a second preset operation, a plurality of second windows in the first display region in a preset manner, and the plurality of second windows are all in an active state, wherein the plurality of second windows do not overlap one another. It should be understood that the description of the electronic device control method is equally applicable to the apparatus, and the apparatus includes modules for implementing various components of the method embodiments described above, which will not be repeated here.

In addition, the present disclosure further provides a terminal, including: at least one memory and at least one processor, wherein the memory is configured to store a program code, and the processor is configured to call the program code stored in the memory to perform the above electronic device control method.

In addition, the present disclosure further provides a computer storage medium, the computer storage medium stores a program code, and program code is used for performing the above electronic device control method.

In some embodiments, the electronic device control method of the present disclosure can adapt to the needs of multi-window operation and interaction of flexible screens or spliced screens and improve the operation efficiency and interaction convenience of application windows, thereby enhancing the user experience.

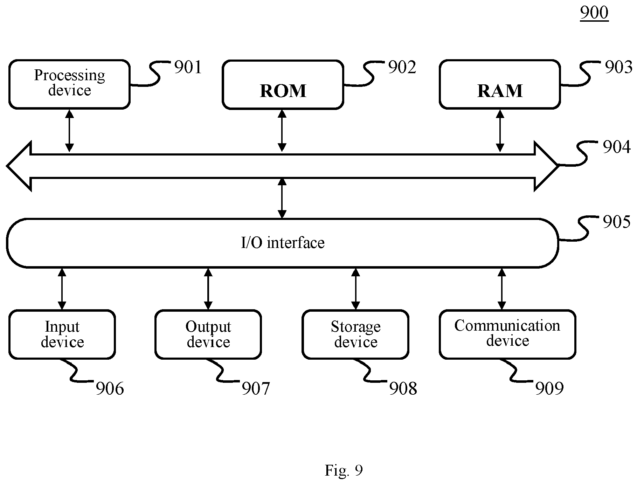

Referring next to FIG. 9, it shows a schematic structural diagram of an electronic device 900 suitable for implementing an embodiment of the present application. The terminal equipment in the embodiments of the present disclosure may include, but is not limited to, mobile terminals such as mobile phones, laptops, digital broadcast receivers, PDAs (personal digital assistants), PADs (tablet computers), PMPs (portable multimedia players), vehicle terminals (such as vehicle navigation terminals), and fixed terminals such as digital TVs, desktop computers, and the like. The electronic device shown in FIG. 9 is only an example, and should not impose any limitations on the functions and scope of use of the embodiments of the present application.

As shown in FIG. 9, an electronic device 900 may include a processing device (eg, a central processing unit, a graphics processor, etc.) 901 that may execute various appropriate actions and processes according to a program stored in a read only memory (ROM) 902 or a program be loaded into random access memory (RAM) 903 from a storage device 908. In the RAM 903, various programs and data necessary for the operation of the electronic device 900 are also stored. The processing device 901, the ROM 902, and the RAM 903 are connected to each other through a bus 904. An input/output (I/O) interface 905 is also connected to the bus 904.

Typically, the following devices can be connected to the I/O interface 905: an input device 906 including, for example, a touch screen, touch pad, keyboard, mouse, etc.; an output device 907 including, for example, a Liquid Crystal Display (LCD), speaker, vibrator, etc.; a storage device 908, including, for example, magnetic tape, hard disk, etc.; and a communication device 909. The communication device 909 may allow electronic device 900 to communicate wirelessly or by wire with other devices to exchange data. Although FIG. 9 shows an electronic device 900 having various devices, it should be understood that not all of the illustrated devices are required to be implemented or provided. More or fewer devices may alternatively be implemented or provided.

In particular, according to embodiments of the present application, the processes described above with reference to the flowcharts may be implemented as computer software programs. For example, embodiments of the present application include a computer program product comprising a computer program carried on a computer-readable medium, the computer program containing program code for performing the method illustrated in the flowchart. In such an embodiment, the computer program may be downloaded and installed from the network via the communication device 909, or from the storage device 908, or from the ROM 902. When the computer program is executed by the processing device 901, the above-mentioned functions defined in the methods of the embodiments of the present application are executed.

It should be noted that the computer-readable medium described in the embodiments of the present application may be a computer-readable signal medium or a computer-readable storage medium, or any combination thereof. The computer-readable storage medium can be, for example, but not limited to, an electrical, magnetic, optical, electromagnetic, infrared, or semiconductor system, apparatus or device, or a combination of thereof. More specific examples of computer readable storage media may include, but are not limited to, electrical connections with one or more wires, portable computer disks, hard disks, random access memory (RAM), read only memory (ROM), erasable Programmable read only memory (EPROM or flash memory), optical fiber, portable compact disk read only memory (CD-ROM), optical storage devices, magnetic storage devices, or any suitable combination thereof. In the embodiments of the present application, a computer-readable storage medium may be any tangible medium that contains or stores a program that can be used by or in conjunction with an instruction execution system, apparatus, or device. While in embodiments of the present application, a computer-readable signal medium may include a data signal in baseband or propagated as part of a carrier wave, carrying computer-readable program code therein. Such propagated data signals may take a variety of forms, including but not limited to electromagnetic signals, optical signals, or any suitable combination thereof. A computer-readable signal medium can also be any computer-readable medium other than a computer-readable storage medium, the computer-readable signal medium can transmit, propagate, or transport the program for use by or in connection with the instruction execution system, apparatus, or device. The program code contained on the computer-readable medium can be transmitted by any suitable medium, including but not limited to: electric wire, optical cable, RF (Radio Frequency, radio frequency), etc., or any suitable combination thereof.

In some embodiments, clients and servers can communicate using any currently known or future network protocol, such as HTTP (HyperText Transfer Protocol), and can be interconnected with any form or medium of digital data communication, such as a communication network. Examples of communication networks include a local area network ("LAN"), a wide area network ("WAN"), an Internet (for example, the Internet), and an end-to-end network (for example, an ad hoc end-to-end network), as well as any network currently known or developed in the future.

The computer-readable medium may be included in the above-mentioned server; or may exist alone without being assembled into the server.

The computer-readable medium carries one or more programs, and when the one or more programs are executed by the electronic device, cause the electronic device to: display a first window in a first display region in response to a first preset operation, a display screen of an electronic device comprising the first display region, and an area of the first display region being smaller than a display area of the display screen ; and display a plurality of second windows in the first display region in a preset manner in response to a second preset operation, the plurality of second windows being all in an active state, wherein the plurality of second windows do not overlap one another.

Computer program code for performing the operations of the embodiments of the present application may be written in one or more programming languages, including object-oriented programming languages-such as Java, Smalltalk, C++, and including conventional procedural programming languages - such as the "C" language or similar programming languages. The program code may execute entirely on the user's computer, partly on the user's computer, as a stand-alone software package, partly on the user's computer and partly on a remote computer, or entirely on the remote computer or server. In the case of a remote computer, the remote computer may be connected to the user's computer through any kind of network, including a local area network (LAN) or a wide area network (WAN), or may be connected to an external computer (eg, using an Internet service provider via Internet connection).

The flowchart and block diagrams in the Figures illustrate the architecture, functionality, and operation of possible implementations of systems, methods and computer program products according to various embodiments of the present application. In this regard, each block in the flowchart or block diagrams may represent a module, program segment, or portion of code that contains one or more executable instructions for implementing the specified logical functions. It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It is also noted that each block of the block diagrams and/or flowchart, and combinations of blocks in the block diagrams and/or flowchart, can be implemented in dedicated hardware-based systems that perform the specified functions or operations, or can be implemented in a combination of dedicated hardware and computer instructions.

The units involved in the embodiments of the present application may be implemented in a software manner, and may also be implemented in a hardware manner. The names of these units do not constitute a limitation of the unit itself under certain circumstances. For example, the display module may also be described as a unit configured to display a first window in the first display region in response to a first preset operation.

The functions described above can be performed at least partially by one or more hardware logic components. For example, unrestricted, the types of hardware logic components that can be used include field programmable gate arrays (FPGA), dedicated integrated circuits (ASIC), dedicated standard products (ASSPs), on-chip systems (SOCs), complex programmable logic devices (CPLDs), and so on.

In accordance with one or more embodiments of the present disclosure, an electronic device control method is provided, a display screen of an electronic device comprising a first display region, and an area of the first display region being smaller than a display area of the display screen, wherein the electronic device control method comprises: displaying a first window in the first display region in response to a first preset operation; and displaying a plurality of second windows in the first display region in a preset manner in response to a second preset operation, the plurality of second windows being all in an active state, wherein the plurality of second windows do not overlap one another.

In accordance with one or more embodiments of the present disclosure, the display screen comprises a foldable flexible screen or two or more spliced display screens, the display screen further comprises a second display region, the first display region and the second display region at least partially overlap when the display screen is in a folded state, or the first display region and the second display region correspond to different display screens of the spliced display screens.

In accordance with one or more embodiments of the present disclosure, the second preset operation comprises a gesture pinch operation, a click on a physical button or a virtual button or an expansion of the display screen when the display screen is in a folded state.

In accordance with one or more embodiments of the present disclosure, after the first display region displays the plurality of second windows in a preset manner, one of the plurality of second windows is displayed in a full screen manner in the first display region in response to a third preset operation on one of the plurality of second windows.

In accordance with one or more embodiments of the present disclosure, displaying the first window in the first display region comprises displaying the first window in the first display region in a full screen manner.

In accordance with one or more embodiments of the present disclosure, the plurality of second windows comprise a plurality of preset windows or a plurality of recently operated windows.

In accordance with one or more embodiments of the present disclosure, the gesture pinch operation comprises a touch operation and/or a non-touch operation.

In accordance with one or more embodiments of the present disclosure, when the gesture pinch operation is the touch operation, the gesture pinch operation is recognized by movement of coordinates of fingers in the display screen.

In accordance with one or more embodiments of the present disclosure, when the gesture pinch operation is the non-touch operation, the gesture pinch operation is recognized by following steps: obtaining a plurality of images of fingers within a preset time interval; and determining whether a movement trajectory of the fingers is the gesture pinch operation by analyzing the plurality of images.

In accordance with one or more embodiments of the present disclosure, an electronic device control apparatus is provided, a display screen of an electronic device comprising a first display region, and an area of the first display region being smaller than a display area of the display screen, wherein the electronic device control apparatus comprises: a display module configured to display a first window in the first display region in response to a first preset operation; and a control module configured to display a plurality of second windows in the first display region in a preset manner in response to a second preset operation, the plurality of second windows being all in an active state, wherein the plurality of second windows do not overlap one another.

In accordance with one or more embodiments of the present disclosure, a terminal device is provided, the terminal device comprises: at least one memory and at least one processor, wherein the at least one memory is configured to store a program code, and the at least one processor is configured to call the program code stored in the memory to perform the electronic device control method.

In accordance with one or more embodiments of the present disclosure, a storage medium is provided, the storage medium is configured to store a program code, wherein the program code is used for performing the electronic device control method.

The above description is only a preferred embodiment of the present application and an illustration of the applied technical principles. It should be understood by those skilled in the art that the scope of the disclosure involved in the embodiments of the present application is not limited to the technical solution formed by the specific combination of the above technical features, and should also cover, without departing from the above inventive concept, the above Other technical solutions formed by any combination of technical features or their equivalent features. For example, a technical solution is formed by replacing the above features with the technical features disclosed (but not limited to) in the embodiments of the present application with similar functions.

Furthermore, although the operations are described in a particular order, this should not be understood as requiring the operations to be performed in the particular order shown or in a sequential order. Under certain circumstances, multitasking and parallel processing may be beneficial. Similarly, although the above discussion contains a number of specific implementation details, these should not be interpreted as limiting the scope of the disclosure. Certain features described in the context of separate embodiments may also be implemented in a single embodiment in combination. Instead, various features described in the context of a single embodiment may also be implemented in multiple embodiments individually or in any suitable sub combination.

Although the subject matter has been described in terms specific to the structural features and/or method logic actions, it should be understood that the subject matter defined in the appended claims is not necessarily limited to the specific features or actions described above. On the contrary, the specific features and actions described above are only examples of realizing the claims.

## Claims

1. An electronic device control method, **characterized by**, a display screen of an electronic device comprising a first display region, and an area of the first display region being smaller than a display area of the display screen, wherein the electronic device control method comprises:
displaying a first window in the first display region in response to a first preset operation; and
displaying a plurality of second windows in the first display region in a preset manner in response to a second preset operation, the plurality of second windows being all in an active state,
wherein the plurality of second windows do not overlap one another.

2. The method according to claim 1, **characterized by**, the display screen comprises a foldable flexible screen or two or more spliced display screens, the display screen further comprises a second display region, the first display region and the second display region at least partially overlap when the display screen is in a folded state, or the first display region and the second display region correspond to different display screens of the spliced display screens.

3. The method according to claim 1, **characterized by**, the second preset operation comprises a gesture pinch operation, a click on a physical button or a virtual button or an expansion of the display screen when the display screen is in a folded state.

4. The method according to claim 1, **characterized by**, after the first display region displays the plurality of second windows in a preset manner, one of the plurality of second windows is displayed in a full screen manner in the first display region in response to a third preset operation on one of the plurality of second windows.

5. The method according to claim 1, **characterized by**, displaying the first window in the first display region comprises displaying the first window in the first display region in a full screen manner.

6. The method according to claim 1, **characterized by**, the plurality of second windows comprise a plurality of preset windows or a plurality of recently operated windows.

7. The method according to claim 3, **characterized by**, the gesture pinch operation comprises a touch operation and/or a non-touch operation.

8. The method according to claim 7, **characterized by**, when the gesture pinch operation is the touch operation, the gesture pinch operation is recognized by movement of coordinates of fingers in the display screen.

9. The method according to claim 7, **characterized by**, when the gesture pinch operation is the non-touch operation, the gesture pinch operation is recognized by following steps:
obtaining a plurality of images of fingers within a preset time interval; and
determining whether a movement trajectory of the fingers is the gesture pinch operation by analyzing the plurality of images.

10. An electronic device control apparatus, **characterized by**, a display screen of an electronic device comprising a first display region, and an area of the first display region being smaller than a display area of the display screen, wherein the electronic device control apparatus comprises:
a display module configured to display a first window in the first display region in response to a first preset operation; and
a control module configured to display a plurality of second windows in the first display region in a preset manner in response to a second preset operation, the plurality of second windows being all in an active state,
wherein the plurality of second windows do not overlap one another.

11. A terminal device, **characterized by**, comprising:
at least one memory and at least one processor,
wherein the at least one memory is configured to store a program code, and the at least one processor is configured to call the program code stored in the memory to perform the method according to any one of claims 1 to 9.

12. A non-transient storage medium, **characterized by**, the non-transient storage medium is configured to store a program code, wherein the program code, whenexecuted by a processor, cause the processor to performe the method according to any one of claims 1 to 9.
